# EUROPEAN PATENT SPECIFICATION

(11) **EP 3 871 950 B1**
(45) Date of publication and mention of the grant of the patent: **08.06.2022**
(21) Application number: 21156810.0
(22) Date of filing: 12.02.2021
(51) Int. Cl.: B62D 9/00, B62D 12/00, B62D 6/00

(54) **HIGH-MANEUVERABILITY VARIABLE-STEERING TRACTOR**
HOCHMANÖVRIERFÄHIGER TRAKTOR MIT VARIABLER LENKUNG
TRACTEUR À DIRECTION VARIABLE ET À GRANDE MANIABILITÉ

(30) Priority: 25.02.2020 IT 202000003859; 15.01.2021 IT 202100000668
(43) Date of publication of application: 01.09.2021
(73) Proprietor: BCS S.p.A., 20123 Milano (MI) (IT)
(72) Inventor: CONATRALI, MARCELLO, 46019 Cizzolo di Viadana (IT)
(74) Representative: Franco Martegani S.r.l.

(56) References cited:
- EP-A1- 2 404 808
- EP-A2- 1 174 329
- EP-A2- 1 502 839
- EP-B1- 1 502 839
- EP-B1- 2 404 808
- US-A1- 2007 284 173

## Description

The present invention relates to a high-maneuverability variable-steering tractor.

Tractors are known, which have been specifically designed for being used in a particular way, for example in vineyards and orchards where an adequate maneuverability is required due to the presence of narrow and restricted operating spaces.

It should in fact be taken into account that the possibility of having a good maneuverability allows the production cycle to be improved and optimized, also reducing necessary maneuvers, for example field-end, to the minimum. Directly and strictly connected to these problems are those that allow a saving of time and fuel, together with a reduction in polluting and harmful emissions.

An example of a vehicle of this type is disclosed in patent EP1502839 by the same applicant, which has an engine cantilevered from a front frame bearing front wheels wherein the front frame is constrained by a hinge to the rear frame where the rear wheels are positioned. A mechanical synchronization unit, with articulated rods and levers, coordinates the movement of the wheels and the movements between the front frame and the rear frame.

This arrangement first of all requires the entire arrangement of kinematic mechanisms and levers specific for the synchronization of the parts.

The kinematic mechanisms responsible for this are subjected to stress and create an obligatory relationship between the parts both in the operational working condition and in the non-operational condition during the movement of the vehicle between one operating site and another or much more simply in routes from the shed to the operating sites and back.

The relationship between said parts can also give rise to various driving difficulties if the speed during a movement exceeds certain values.

Furthermore, the rigidity imposed between the parts by the mechanical interconnections provided by the above-mentioned solution makes the vehicle not easy to drive when it is required to travel on particularly sloping or rough terrain.

EP1174329 describes a vehicle with a double steering system in which the vehicle is divided into a front and a rear part. Two pairs of cylinders activate either only one or only the other steering system.

The general objective of the present invention is to provide a variable-steering tractor capable of overcoming the above-mentioned drawbacks of the prior art in an extremely simple, economical and particularly functional way.

A further objective of the present invention is to provide a variable-steering tractor wherein the driver can intervene to vary the steering according to the particular requirement which can arise in the form of a different route, a different speed, terrain and spaces in which to operate.

Another objective of the present invention is to provide a variable-steering tractor wherein transmissions and kinematic mechanisms provided for implementing even narrow turns are minimized so as to limit possible failures due to their complicated and complex connection.

The above-mentioned objectives are achieved by a high-maneuverability variable-steering tractor constructed according to independent claim 1 and the following subordinate claims.

The structural and functional characteristics of the present invention and its advantages with respect to the known art will become even evident from the following description, referring to the attached schematic drawings, which show an embodiment example of the same invention. In the drawings:
Figure 1 shows a plan view from above of a high-maneuverability variable-steering tractor according to the present invention in a first position which is such that its parts are aligned straight with respect to each other;
Figure 2 shows a plan view from above of the tractor shown in figure 1 according to the present invention in a second position in a steering phase;
Figure 3 shows a plan view from above of a second embodiment of a high-maneuverability variable-steering tractor according to the present invention in a first position which is such that its parts are aligned straight with respect to each other;
Figure 4 shows a plan view from above of a tractor shown in figure 3 according to the present invention in a second position in a steering phase;
Figure 5 shows a plan view from above of a third embodiment of a high-maneuverability variable-steering tractor according to the present invention in a first position which is such that its parts are aligned straight with respect to each other;
Figure 6 is a block diagram of drive parts of a high-maneuverability variable-steering tractor according to the present invention.

With reference to the figures, which are exemplary and nonlimiting, these show embodiments of a high-maneuverability variable-steering tractor produced according to the present invention. It should be noted that for the sake of simplicity, in the various embodiments, the same reference numbers are used for identical elements in the various examples.

In this description, the term "tractor" indicates both agricultural forestry tractors and also self-propelled operating vehicles or in any case all those vehicles that are destined for agriculture and green maintenance in general.

This type of tractor therefore comprises a front part 11 and a rear part 12, articulated to each other in a pivot 13.

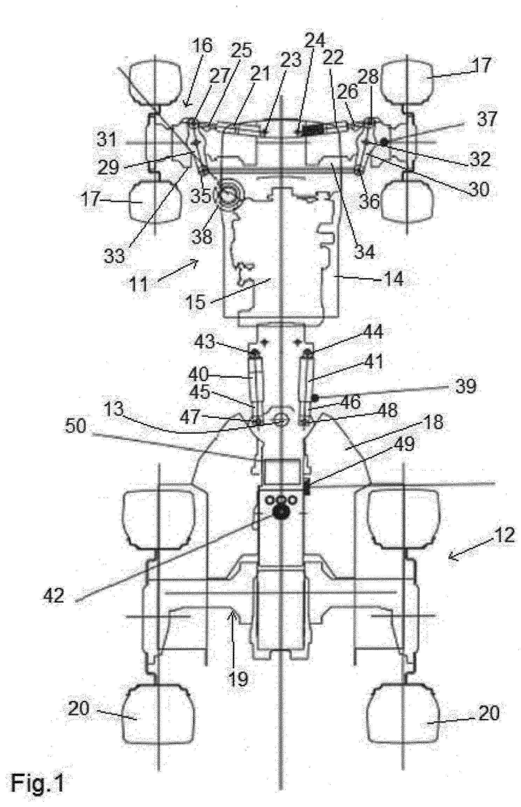

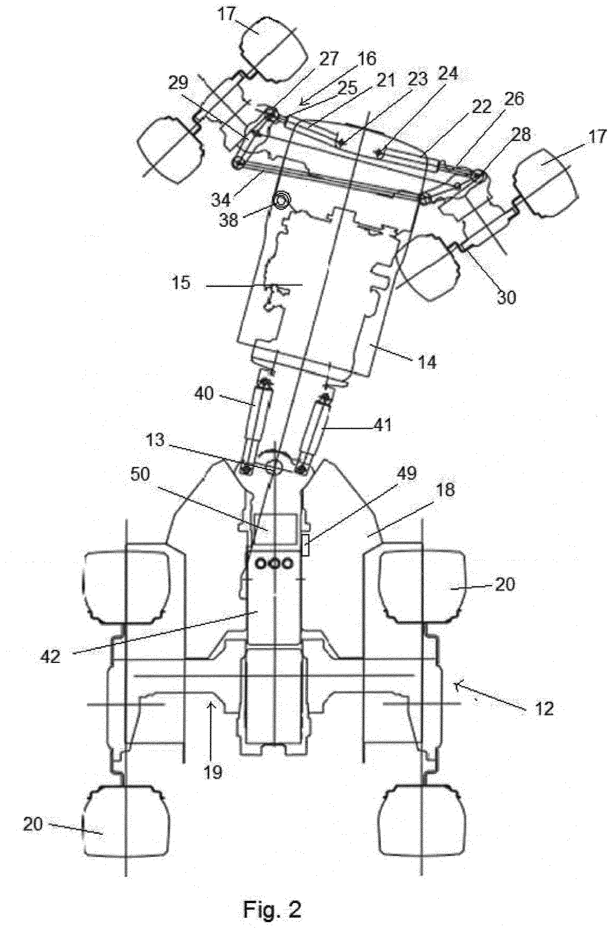

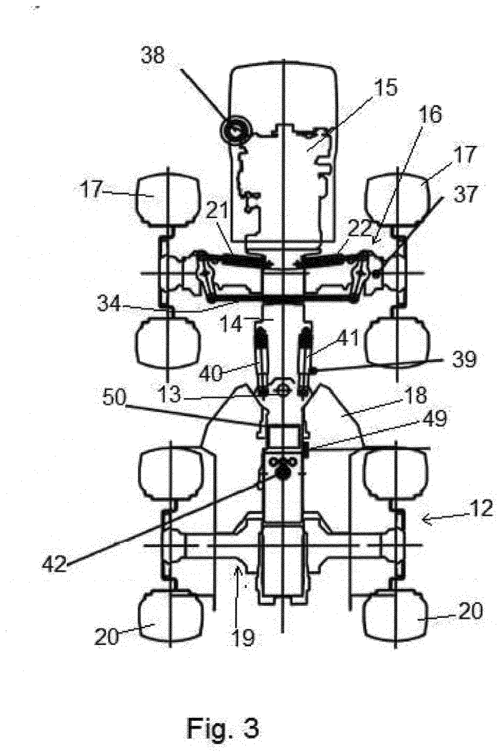

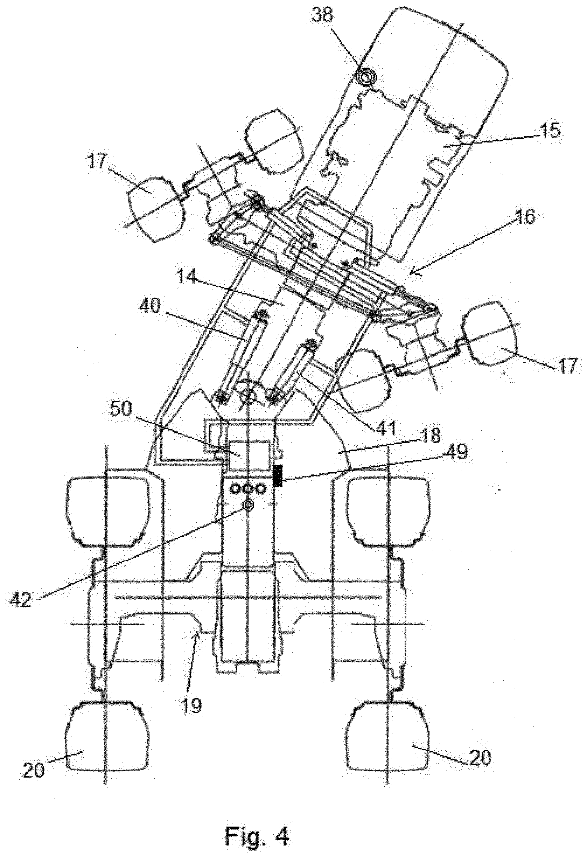

The front 11 provides a respective front frame 14 on which a motor 15 is arranged. In the example shown in figures 1 and 2, the motor 15 forms part of the front frame and participates in the front supporting structure. In figures 3 and 4 relating to a second embodiment, the motor 15 is arranged in a cantilevered position in front of the front frame 14.

A front axle 16 is also provided which has two front steering wheels 17 with respect to the same. It should be noted that the front axle 16 can be fixed or suspended.

The rear part 12 on a respective rear frame 18 provides a rear axle 19 provided with respective rear wheels 20. In a preferred embodiment, the front wheels 17 have a smaller diameter with respect to the rear wheels 20. Alternatively, the front wheels 17 and the rear wheels 20 can also have the same diameter.

The front axle 16 is arranged in a terminal part of the front frame 14 and provides in the examples of figures 1, 2 and 3, 4, a first pair of double-acting hydraulic cylinders 21 and 22 which define a command for obtaining that the front wheels 17 are steering. Alternatively, however, there can be a single cylinder with a pass-through rod capable of exerting the same function. In particular, each of said hydraulic cylinders 21, 22 is connected by means of pins 23, 24 at a first end to the front frame 14. Free opposite ends of rods 25 and 26 of these hydraulic cylinders 21 and 22 are connected thereto by means of pins 27, 28 to respective levers 29 and 30 integral through central pins 31 and 32 with wheel hubs 17, schematized in 33.

A connection bar 34 is arranged between the levers 29 and 30, connected to these by means of pivots 35 and 36. This bar 34 correlates the rotation of the two wheels 17 controlled by the respective hydraulic cylinders 21 and 22.

According to the invention, the front frame 14 also provides for the presence of a front angular sensor 37 as well as a respective hydraulic pump 38.

Furthermore, according to the invention, provision is made for the arrangement of a second pair of double-acting hydraulic cylinders 40 and 41 between the front part 11 of the tractor or front frame 14 and the rear part 12 of the tractor or rear frame 18 to actuate a rotation of the front frame 14 with respect to the rear frame 18. Alternatively, there can in any case be a single cylinder with a pass-through rod which exerts the same function.

In the example shown, each of said hydraulic cylinders 40, 41 of the second pair is connected by means of pins 43, 44 in a first end thereof to the front frame 14. Free opposite ends of rods 45 and 46 of these hydraulic cylinders 40 and 41 are connected thereto by means of pins 47, 48 to the rear frame 18. These pins 47, 48 are arranged on opposite sides with respect to the pivot 13 between the front part 11 and the rear part 12 of the tractor.

The rear frame 18, in addition to providing the rear axle 19, carries a power steering 42, an electronic control unit or central unit 49 and a hydraulic oil-flow distribution block 50.

A central angle sensor 39 is arranged at the second pair of double-acting hydraulic cylinders 40 and 41, between the front part 11 of the tractor or front frame 14 and the second rear part 12 of the tractor or rear frame 18.

It should be pointed out that the angle sensors 37 and 39, in addition to detecting the correct alignment between the front frame 11 and the rear frame 12 as alignment sensors, always read the front and rear steering angle. In this way these sensors 37 and 39 are angular sensors for reading the steering situation.

It is immediately evident that according to the invention there is no provision for, and therefore there is no physical synchronization mechanism between the front frame 14 and the rear frame 18 as this is effected hydrostatically with electronic control.

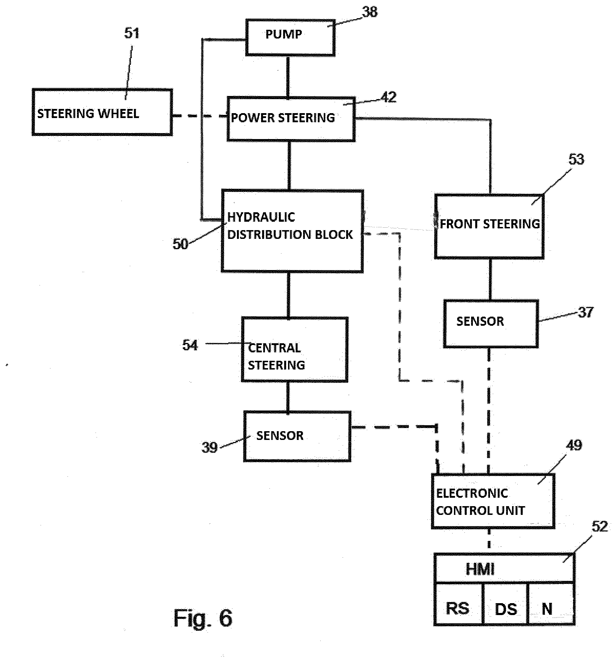

Figure 6 shows a block diagram of drive parts of a high-maneuverability variable-steering tractor according to the present invention.

It can be seen from this diagram that the tractor according to the invention schematically provides a steering wheel, indicated with 51, through which a power steering 42 is operated. Said power steering 42 is connected to the pump 38 and directly controls a front steering system 53 operatively connected to the angle sensor 37 for reading the front steering situation.

The pump 38 is also connected to the hydraulic oil-flow distribution block 50 which is connected to the central steering system 54 operatively connected to the angle sensor 39 for reading the situation of the central steering system 54. The angle sensor 37 and the angle sensor 38 are in turn connected to and communicate with the electronic control unit or central unit 49.

The tractor must naturally also have among its controls an operating mode-selector device 52 operatively connected to the above-mentioned electronic control unit 49 and to the angle sensors 37 and 39. The selector device 52 can be actuated by the user or driver for choosing, according to the type of use, the operating position which makes it possible to act on the front steering system 53, on the central steering system 54 or on both in order to have the type of steering deemed necessary and selected by the user himself.

It should also be noted that the electronic control unit 49 is connected to the hydraulic oil-flow distribution block 50, coming from the pump 38.

There is thus a control system, comprising at least two angular sensors 37 and 39, which control the alignment between the front frame 14 and the rear frame 18 in the neutral position and allow the passage between the various steering modes that are provided in a high-maneuverability variable-steering tractor of the invention.

In particular, figure 1 shows a high-maneuverability variable-steering tractor according to the present invention in a first position which is such that its parts are aligned straight with respect to each other.

In this position, identifiable with N as a neutral phase of the selector 52, the tractor is aligned straight in its front frame 11 and rear frame 12 and the two angle sensors 37 and 39 act as alignment sensors, they detect this position and control the hydraulic circuit so that the flow-rate to the two pairs of cylinders 21, 22 and 40, 41 is such as to allow the synchronism of the movement. The tractor therefore remains in this condition which acts as a verification phase and which is managed by the electronic control unit 49.

The selector 52 however provides at least two other operating modes: a mode indicated by RS with actuation of the front steering alone and a mode indicated by DS with the simultaneous actuation of the front steering and central steering.

It should be noted that any passage between one mode and the other RS or DS is only allowed through the passage of the neutral N positions of the two steering wheels, a position verified by sensors 37 and 39.

The condition is different in a steering phase, by turning the steering wheel 51 which controls the power steering 42. In this phase, the power steering 42 is activated, which distributes the flow-rate of oil coming from the hydraulic pump 38, according to the command implemented by the selector 52 and consequently by the electronic control unit or control unit 49.

For usual steering, in fact, the oil is only sent to the two cylinders 21 and 22 of the front axle 16 by implementing the RS mode.

In this RS mode, only the front steering is activated and the angle sensor 37 reads the situation of the front steering.

The operator selects the RS mode by means of the selector 52, consequently the control unit 49 keeps the oil duct closed towards the central steering by means of the hydraulic distribution block 50, constantly controlling that the angle sensor 39 is in the neutral position and in any case compensating any misalignments with respect to the central neutral position. In this case the tractor functions like a normal tractor with front steering wheels which are moved by the operator by acting on the steering wheel 51 which, connected to the power steering 42, directs the oil of the pump 38 towards the front steering or towards the two cylinders 21, 22.

If the steering is maximized, the oil is also sent to the two cylinders 40, 41 which also actuate the steering of the central articulation or they also determine a rotation around the pivot 13 between the front part 11 and the rear part 12 of the tractor.

This is the DS mode in which there is the simultaneous actuation of the front steering and central steering. The operator selects the DS mode using the selector 52.

In this case, when the operator actuates the steering wheel 51 which, by means of the power steering 42, sends the oil from the pump 38 to the cylinders 21, 22 of the front axle, this movement is thus read by the angular sensor 37 which communicates with the control unit 49. Said control unit 49, given the DS mode, consequently actuates the hydraulic distribution block 50 so that the oil of the pump 38 also suitably goes towards the central steering, or towards the cylinders 40, 41. In this way, the central steering "follows" the movement of the front steering with a suitable gain ratio as long as the angle sensor 37 communicates movements of the front steering. By reading the signal of the front angle sensor 37, in fact, the control unit 49 actuates the central steering in proportional mode by means of the hydraulic flow distribution block 50. The angle sensor 39 verifies that what the control unit 49 is commanding, is correctly effected by actuating the cylinders 40, 41.

As can be seen, according to the present invention, in this type of tractor, the perfect simultaneous movement of both the front and central steering systems is provided. And it can also be noted that the actuation system of the central articulation, or the two cylinders 40, 41, operate in parallel with the front steering part, or with the two cylinders 21, 22.

The angular sensors 37, 39 have the task of informing the control unit 49 which will decide whether to implement hydraulic corrections on the central part in order to compensate for any oil leaks.

The parallelism allows there to be the same number of steering-wheel turns 51 regardless of the RS mode (front only) or the DS mode (double steering).

It can also be seen how the central steering is hydraulically disconnected from the power steering 42.

An arrangement such as that of the present invention therefore allows, regardless of the roadway of the tractor (generally narrow), the maximum steering angle on the central articulation to be always obtained.

It should be pointed out again that in order to pass from one phase to another, the control system must pass through the neutral phase of the straight aligned tractor, described above.

In this way, it is possible to have a classic steering mode with only the front steering wheels 17, a steering mode even through an articulation around the pivot 13 and a third joint steering mode of the front steering wheels 17 and the articulation around the central pivot 13.

It can consequently be seen that according to the present invention, a double steering mechanism has been identified for improving the turning radius according to the specific requirement. In this way, in a tractor according to the invention, the steering of the front wheels is combined with a central articulation without precluding the possibility of using the two steering systems separately.

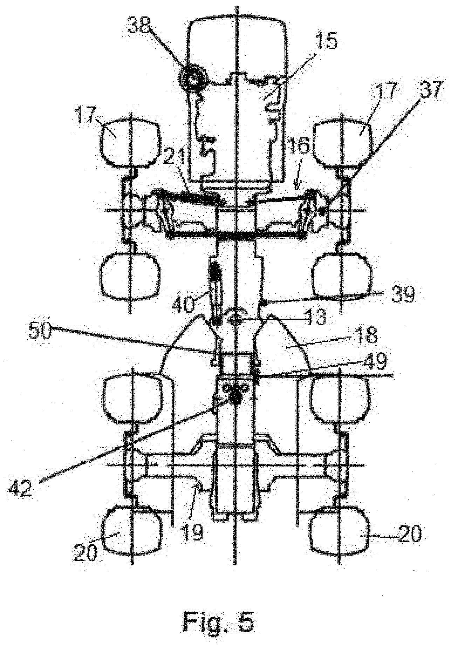

In a simplified embodiment, the present invention can alternatively also provide a single cylinder, indicated by 21 in figure 5, for implementing the front steering, but it can also be the single cylinder previously indicated by 22. Analogously, the central steering can also provide for the presence of a single cylinder, indicated with 40, for the central steering. Also in this case, it can analogously be that indicated with 41.

It should be noted that the presence of the central pin and the possibility of implementing a central steering allows the constraint or the limit on the steering of the front wheels to be minimized, which, when rotating, interfere with the frame and/or the engine, the narrower the track.

The present invention is characterized by the independence of the central articulation from the normal steering mode and its possible combination with the same. The deactivation of the central articulation allows the return to a normal use of the tractor.

All of this results in greater maneuverability and safety of the tractor under the various conditions of use.

Furthermore, the significant advantages in the case of a narrow track thanks to the presence of both the front steering and the central steering illustrated above, should not be forgotten.

The objective mentioned in the preamble of the description has thus been achieved.

The protection scope of the present invention is defined by the enclosed claims.

## Claims

1. A high-maneuverability variable-steering tractor comprising a front part (11) which provides a front frame (14) and a rear part (12) which provides a rear frame (18), articulated to each other in a pivot (13), said front frame (14) being associated with an engine (15) and a front axle (16) bearing two front wheels (17), steering with respect to the same, and said rear frame (18) providing a rear axle (18) bearing rear wheels (20), wherein at least a first double-acting hydraulic cylinder (21 or 22) is provided in correspondence with said front axle (16), which defines a control for said front wheels (17); a hydraulic pump (38) and a power steering (42) connected to a steering wheel (51) of the tractor also being provided, at least a second double-acting hydraulic cylinder (40 or 41) being provided between said front frame (14) and said rear frame (18) at said pivot (13) for rotating the front frame (14) with respect to the rear frame (18), an electronic control unit (49) being provided, and also an oil-flow distribution hydraulic block (50) coming from the pump (38) being operatively connected to angle sensors (37, 39) of a steering angle of said front frame (11) and said rear frame (12), and a selector (52) being provided which can be actuated by the user for selecting an operating position, **characterized in that** both said at least one first hydraulic cylinder (21 or 22) and said at least one second hydraulic cylinder (40 or 41) can be simultaneously actuated, as they are arranged in parallel so that it is possible to act on the front steering, on the central steering or on both in order to have the type of steering deemed necessary and selected by the user himself, wherein said steering wheel is connected to said power steering which in turn directly controls said at least one first hydraulic cylinder (21 or 22) for controlling the rotation of said two front steering wheels (17), said at least one second hydraulic cylinder (40 or 41) being connected to said hydraulic oil-flow distribution block (50) for the parallel actuation of the rear frame (18) with respect to the front frame (14), said two angle sensors (37, 39) being connected to said electronic control unit which actuates said at least one second hydraulic cylinder (40 or 41) in proportional mode by means of said hydraulic oil-flow distribution block (50) coming from the pump (38), said selector (52) providing a first operating mode (RS) for actuating the front steering only, a second operating mode (DS) for simultaneously actuating the front and central steering and a third neutral mode (N) for each passage between a first and a second operating mode and vice versa.

2. The tractor according to claim 1, **characterized in that** said angular sensors are positioned one (37) at said front axle (16) and the other (39) at said pivot (13).

3. The tractor according to claim 1 or 2, **characterized in that** said front axle (16) is arranged in a front end part of said front frame (14).

4. The tractor according to one or more of the previous claims, **characterized in that** said engine (15) participates in the front supporting structure of the front frame (14).

5. The tractor according to one or more of the previous claims, **characterized in that** said engine (15) is arranged cantilevered from said front frame (14).

6. The tractor according to one or more of the previous claims, **characterized in that** a first pair of double-acting hydraulic cylinders (21, 22) is provided in correspondence with said front axle (16), which define a control for said front wheels (17).

7. The tractor according to one or more of the previous claims, **characterized in that** a second pair of double-acting hydraulic cylinders (40, 41) is provided at said pivot (13) for rotating the front frame (14) with respect to the rear frame (18) .

8. A method for actuating a tractor according to one or more of the previous claims from 1 to 7, said selector (52) providing for the actuation in said tractor of one of said first (RS) and second (DS) operating modes and vice versa from a third neutral mode (N) wherein said angle sensors (37, 39) control the alignment between the front frame (14) and the rear frame (18) wherein said frames (14, 18) are aligned straight with respect to each other and allow the passage between the first operating mode (RS) for actuating the front steering only and the second operating mode (DS) for simultaneously actuating the front and central steering.

9. The method for actuating a tractor according to the previous claim 8, wherein in said first mode (RS), in which only the front steering is actuated, the angle sensor (37) reads the situation of the front steering and through the unit control (49) keeps an oil duct closed towards the central steering by means of the hydraulic distribution block (50) continuously verifying that the angle sensor (39) is in the neutral position, ensuring that the tractor is operating like a normal tractor with front steering wheels moved by the operator by acting on the steering wheel (51) which, connected to the power steering (42), directs the oil of the pump (38) towards the front steering or towards the two cylinders (21, 22).

10. The method for actuating a tractor according to the previous claim 8, wherein in said second mode (DS) there is the simultaneous actuation of the front steering and central steering, when an operator, having selected said second mode (DS) by means of said selector (52), actuates the steering wheel (51) which, through the power steering (42), sends the oil of the pump (38) to the cylinders (21, 22) of the front axle and this movement is read by the angle sensor (37) which communicates with the control unit (49) which, as the second mode (DS) has been selected, actuates the hydraulic distribution block (50) ensuring that the oil of the pump (38) is also flowing appropriately towards the central steering, or towards the cylinders (40, 41) where said angular sensor (39) is positioned, and verifies that this has been correctly effected.

## Patentansprüche

1. Hochmanövrierfähiger Traktor mit variabler Lenkung, mit einem vorderen Abschnitt (11), der einen vorderen Rahmen (14) bereitstellt, und einem hinteren Abschnitt (12), der einen hinteren Rahmen (18) bereitstellt, die in einem Drehpunkt (13) aneinander angelenkt sind, wobei der vordere Rahmen (14) mit einem Motor (15) und einer Vorderachse (16), die zwei Vorderräder (17) trägt, assoziiert ist, und in Bezug auf diese lenkt, und der hintere Rahmen (18) eine Hinterachse (18) aufweist, die Hinterräder (20) trägt, wobei mindestens ein erster doppelt wirkender Hydraulikzylinder (21 oder 22) in Übereinstimmung mit der Vorderachse (16) vorgesehen ist, der eine Steuerung für die Vorderräder (17) definiert; eine Hydraulikpumpe (38) und eine Servolenkung (42), die mit einem ebenfalls vorgesehen Lenkrad (51) des Traktors verbunden ist, wobei mindestens ein zweiter doppelt wirkender Hydraulikzylinder (40 oder 41) zwischen dem vorderen Rahmen (14) und dem hinteren Rahmen (18) an dem Drehpunkt (13) zum Drehen des vorderen Rahmens (14) in Bezug auf den hinteren Rahmen (18) vorgesehen ist, wobei eine elektronische Steuereinheit (49) vorgesehen ist, und auch ein von der Pumpe (38) kommenden Ölstromverteilungs-Hydraulikblock (50), der betriebsmäßig mit Winkelsensoren (37, 39) eines Lenkwinkels des vorderen Rahmens (11) und des hinteren Rahmens (12) in Wirkverbindung steht, und ein Selektor (52) vorgesehen ist, der vom Benutzer zur Auswahl einer Betriebsposition betätigt werden kann, **dadurch gekennzeichnet, dass** sowohl der mindestens eine erste Hydraulikzylinder (21 oder 22) als auch der mindestens eine zweite Hydraulikzylinder (40 oder 41) gleichzeitig betätigt werden können, da sie parallel angeordnet sind, so dass es möglich ist, auf die vordere Lenkung, auf die mittlere Lenkung oder auf beide einzuwirken, um die Art der Lenkung zu haben, die vom Benutzer selbst als notwendig erachtet und ausgewählt wird, wobei das Lenkrad mit der Servolenkung verbunden ist, die ihrerseits direkt den mindestens einen ersten Hydraulikzylinder (21 oder 22) zur Steuerung der Drehung der beiden vorderen Lenkräder (17) steuert, wobei der mindestens eine zweite Hydraulikzylinder (40 oder 41) mit dem hydraulischen Ölstromverteilungsblock (50) für die parallele Betätigung des hinteren Rahmens (18) in Bezug auf den vorderen Rahmen (14) verbunden ist, wobei die beiden Winkelsensoren (37, 39) mit der elektronischen Steuereinheit verbunden sind, die den mindestens einen zweiten Hydraulikzylinder (40 oder 41) im Proportionalbetrieb mittels des von der Pumpe (38) kommenden hydraulischen Ölstromverteilungsblock (50) betätigt, wobei der Selektor (52) einen ersten Betriebsmodus (RS) für die Betätigung nur der vorderen Lenkung, einen zweiten Betriebsmodus (DS) für die gleichzeitige Betätigung der vorderen und der mittleren Lenkung und einen dritten neutralen Modus (N) für jeden Übergang zwischen einem ersten und einem zweiten Betriebsmodus und umgekehrt bereitstellt.

2. Traktor nach Anspruch 1, **dadurch gekennzeichnet, dass** einer der Winkelsensoren (37) an der Vorderachse (16) und der andere (39) an dem Drehpunkt (13) positioniert sind.

3. Traktor nach Anspruch 1 oder 2, **dadurch gekennzeichnet, dass** die Vorderachse (16) in einem vorderen Abschnitt des vorderen Rahmens (14) angeordnet ist.

4. Traktor nach einem oder mehreren der vorhergehenden Ansprüche, **dadurch gekennzeichnet, dass** der Motor (15) an der vorderen Tragstruktur des vorderen Rahmens (14) beteiligt ist.

5. Traktor nach einem oder mehreren der vorhergehenden Ansprüche, **dadurch gekennzeichnet, dass** der Motor (15) freitragend von dem vorderen Rahmen (14) angeordnet ist.

6. Traktor nach einem oder mehreren der vorhergehenden Ansprüche, **dadurch gekennzeichnet, dass** ein erstes Paar von doppelt wirkenden Hydraulikzylindern (21, 22) in Übereinstimmung mit der Vorderachse (16) vorgesehen ist, die eine Steuerung für die Vorderräder (17) definieren.

7. Traktor nach einem oder mehreren der vorhergehenden Ansprüche, **dadurch gekennzeichnet, dass** ein zweites Paar von doppelt wirkenden Hydraulikzylindern (40, 41) an dem Drehpunkt (13) vorgesehen ist, um den vorderen Rahmen (14) in Bezug auf den hinteren Rahmen (18) zu drehen.

8. Verfahren zum Betätigen eines Traktors nach einem oder mehreren der vorhergehenden Ansprüche 1 bis 7, wobei der Selektor (52) bereitstellt, dass in dem Traktor eine der ersten (RS) und zweiten (DS) Betriebsmodi und umgekehrt aus einer dritten neutralen Modus (N) betätigt wird, wobei die Winkelsensoren (37, 39) die Ausrichtung zwischen dem vorderen Rahmen (14) und dem hinteren Rahmen (18) steuern, wobei die Rahmen (14, 18) gerade zueinander ausgerichtet sind und den Übergang zwischen dem ersten Betriebsmodus (RS) zur Betätigung nur der vorderen Lenkung und dem zweiten Betriebsmodus (DS) zur gleichzeitigen Betätigung der vorderen und mittleren Lenkung ermöglichen.

9. Verfahren zum Betätigen eines Traktors nach dem vorhergehenden Anspruch 8, wobei in dem ersten Modus (RS), in dem nur die vordere Lenkung betätigt wird, der Winkelsensor (37) die Situation der vorderen Lenkung abliest und durch die Einheitssteuerung (49) eine Ölleitung zur mittleren Lenkung mittels des hydraulischen Verteilerblocks (50) geschlossen hält, wobei kontinuierlich überprüft wird, ob der Winkelsensor (39) in der neutralen Position ist, um sicherzustellen, dass der Traktor wie ein normaler Traktor bedient wird mit vom Fahrer bewegten vorderen Lenkrädern, die durch Einwirkung auf das Lenkrad (51), das mit der Servolenkung (42) verbunden ist und das Öl der Pumpe (38) zur vorderen Lenkung oder zu den beiden Zylindern (21, 22) leitet.

10. Verfahren zum Betätigen eines Traktors nach dem vorhergehenden Anspruch 8, wobei in dem zweiten Modus (DS) die vorderen Lenkung und die mittleren Lenkung gleichzeitig betätigt werden, wenn ein Bediener, der den zweiten Modus (DS) mit Hilfe des Selektors (52) ausgewählt hat, das Lenkrad (51) betätigt, das über die Servolenkung (42) das Öl der Pumpe (38) zu den Zylindern (21, 22) der Vorderachse sendet, und diese Bewegung wird von dem Winkelsensor (37) erfasst, der mit der Steuereinheit (49) kommuniziert, die, da der zweite Modus (DS) gewählt wurde, den hydraulischen Verteilerblock (50) betätigt, der sicherstellt, dass das Öl der Pumpe (38) auch in geeigneter Weise zur mittleren Lenkung oder zu den Zylindern (40, 41) fließt, wo der Winkelsensor (39) positioniert ist, und verifiziert, dass dies korrekt ausgeführt wurde.

## Revendications

1. Tracteur à direction variable et à grande maniabilité comprenant une partie avant (11) qui fournit un châssis avant (14) et une partie arrière (12) qui fournit un châssis arrière (18), articulées l'une à l'autre dans un pivot (13), ledit châssis avant (14) étant associé à un moteur (15) et un essieu avant (16) portant deux roues avant (17), directrices par rapport à celui-ci, et ledit châssis arrière (18) fournissant un essieu arrière (18) portant des roues arrière (20), au moins un premier vérin hydraulique à double effet (21 ou 22) étant prévu en correspondance avec ledit essieu avant (16), qui définit une commande pour lesdites roues avant (17) ; une pompe hydraulique (38) et une direction assistée (42) raccordées à un volant (51) du tracteur étant également prévues, au moins un second vérin hydraulique à double effet (40 ou 41) étant prévu entre ledit châssis avant (14) et ledit châssis arrière (18) au niveau dudit pivot (13) pour faire tourner le châssis avant (14) par rapport au châssis arrière (18), une unité de commande électronique (49) étant prévue, et également un bloc hydraulique de distribution d'écoulement d'huile (50) provenant de la pompe (38) qui est fonctionnellement raccordé à des capteurs d'angle (37, 39) d'un angle de direction dudit châssis avant (11) et dudit châssis arrière (12), et un sélecteur (52) étant prévu qui peut être actionné par l'utilisateur en vue du choix d'une position de fonctionnement, **caractérisé en ce que**, ledit au moins un premier vérin hydraulique (21 ou 22) et ledit au moins un second vérin hydraulique (40 ou 41) peuvent être actionnés simultanément, tandis qu'ils sont agencés en parallèle afin qu'une action sur la direction avant, sur la direction centrale ou sur les deux soit possible afin d'obtenir le type de direction jugé nécessaire et choisi par l'utilisateur lui-même, ledit volant étant raccordé à ladite direction assistée qui à son tour commande directement ledit au moins un premier vérin hydraulique (21 ou 22) pour commander la rotation desdits deux roues directrices avant (17), ledit au moins un second vérin hydraulique (40 ou 41) étant raccordé audit bloc de distribution d'écoulement d'huile hydraulique (50) pour l'actionnement parallèle du châssis arrière (18) par rapport au châssis avant (14), lesdits deux capteurs d'angle (37, 39) étant raccordés à ladite unité de commande électronique qui actionne ledit au moins un second vérin hydraulique (40 ou 41) en mode proportionnel au moyen dudit bloc de distribution d'écoulement d'huile hydraulique (50) provenant de la pompe (38), ledit sélecteur (52) fournissant un premier mode de fonctionnement (RS) permettant d'actionner la direction avant seule, un deuxième mode de fonctionnement (DS) permettant d'actionner simultanément la direction avant et centrale et un troisième mode neutre (N) pour chaque passage entre un premier et un deuxième mode de fonctionnement et inversement.

2. Tracteur selon la revendication 1, **caractérisé en ce que** lesdits capteurs angulaires sont positionnés l'un (37) au niveau dudit essieu avant (16) et l'autre (39) au niveau dudit pivot (13).

3. Tracteur selon la revendication 1 ou 2, **caractérisé en ce que** ledit essieu avant (16) est agencé dans une partie d'extrémité avant dudit châssis avant (14).

4. Tracteur selon une ou plusieurs des revendications précédentes, **caractérisé en ce que** ledit moteur (15) participe à la structure de support avant du châssis avant (14).

5. Tracteur selon une ou plusieurs des revendications précédentes, **caractérisé en ce que** ledit moteur (15) est agencé en porte-à-faux par rapport audit châssis avant (14).

6. Tracteur selon une ou plusieurs des revendications précédentes, **caractérisé en ce qu'**une première paire de vérins hydrauliques à double effet (21, 22) est prévue en correspondance avec ledit essieu avant (16), qui définissent une commande pour lesdites roues avant (17).

7. Tracteur selon une ou plusieurs des revendications précédentes, **caractérisé en ce qu'** une seconde paire de vérins hydrauliques à double effet (40, 41) est prévue au niveau dudit pivot (13) pour faire tourner le châssis avant (14) par rapport au châssis arrière (18).

8. Procédé permettant l'actionnement d'un tracteur selon une ou plusieurs des revendications précédentes 1 à 7, ledit sélecteur (52) assurant l'actionnement dans ledit tracteur de l'un desdits premier (RS) et deuxième (DS) modes de fonctionnement et inversement à partir d'un troisième mode neutre (N), lesdits capteurs d'angle (37, 39) commandant l'alignement entre le châssis avant (14) et le châssis arrière (18), lesdits châssis (14, 18) étant alignés rectilignes l'un par rapport à l'autre et permettant le passage entre le premier mode de fonctionnement (RS) pour actionner la direction avant seule et le deuxième mode de fonctionnement (DS) pour actionner simultanément la direction avant et centrale.

9. Procédé permettant l'actionnement d'un tracteur selon la revendication 8 précédente, dans ledit premier mode (RS), dans lequel seule la direction avant est actionnée, ledit capteur d'angle (37) lisant la situation de la direction avant et à travers la commande d'unité (49) maintenant un conduit d'huile fermé vers la direction centrale au moyen du bloc de distribution hydraulique (50) en vérifiant en permanence que le capteur d'angle (39) est dans la position neutre, en s'assurant que le tracteur fonctionne tel un tracteur normal avec des roues avant directrices déplacées par l'opérateur en agissant sur le volant (51) qui, raccordé à la direction assistée (42), dirige l'huile de la pompe (38) vers la direction avant ou vers les deux vérins (21, 22).

10. Procédé permettant l'actionnement d'un tracteur selon la revendication 8 précédente, dans ledit deuxième mode (DS) ladite direction avant et ladite direction centrale étant simultanément actionnées, lorsqu'un opérateur, ayant choisi ledit deuxième mode (DS) au moyen dudit sélecteur (52), actionne le volant (51) qui, par l'intermédiaire de la direction assistée (42), envoie l'huile de la pompe (38) aux vérins (21, 22) de l'essieu avant et ce mouvement est lu par le capteur d'angle (37) qui communique avec l'unité de commande (49) qui, tandis que le deuxième mode (DS) a été choisi, actionne le bloc de distribution hydraulique (50) assurant que l'huile de la pompe (38) s'écoule également de manière appropriée vers la direction centrale, ou vers les vérins (40, 41) où ledit capteur angulaire (39) est positionné, et vérifie que cela a été correctement effectué.
